# EUROPÄISCHE PATENTSCHRIFT

(11) **EP 1 443 255 B1**
(45) Veröffentlichungstag und Bekanntmachung des Hinweises auf die Patenterteilung: **10.03.2010**
(21) Anmeldenummer: 03001825.3
(22) Anmeldetag: 29.01.2003
(51) Int. Cl.: F16L 25/00

(54) **Schnellverbinder für ein Kraftstoffleitungssystem eines Kraftfahrzeuges oder dergleichen**
Quick connector for fuel conduits in a vehicle or similar
Raccord rapide pour conduits de carburant, par exemple dans un véhicule

(43) Veröffentlichungstag der Anmeldung: 04.08.2004
(73) Patentinhaber: TI Automotive (Fuldabrück) GmbH, 34277 Fuldabrück (DE)
(72) Erfinder: Szczepaniak, Andreas Dipl.-Ing., 34253 Lohfelden (DE); Otto, Torsten Dr., 34292 Ahnatal (DE); Rohde, Reiner Dipl.-Ing., 34323 Malsfeld (DE); Rose, Andreas Dipl.-Ing., 34246 Vellmar (DE)
(74) Vertreter: Rohmann, Michael

(56) Entgegenhaltungen:
- FR-A- 1 080 178
- US-A- 3 891 290
- US-A- 5 452 924
- US-A1- 2001 046 111
- US-B1- 6 402 205

## Beschreibung

Die Erfindung betrifft einen Schnellverbinder für ein Kraftstoffleitungssystem eines Kraftfahrzeuges oder dergleichen, bestehend aus einem Vaterstück auf einem Ende eines mit einem elektrisch nicht leitfähigen Kunststoff beschichteten Metallrohres und aus einem elektrisch leitfähigen Mutterstück, welches einerseits eine hülsenförmige Aufnahme, in der das Vaterstück unter Zwischenschaltung wenigstens einer O-Ringdichtung verrastbar ist, und andererseits ein Anschlussteil aufweist, das elektrisch leitend mit einem anzuschließenden Systemelement verbindbar, insbesondere in ein Kunststoffrohr mit einer elektrisch leitfähigen Innenschicht, einführbar ist.

Solche Schnellverbinder werden im Allgemeinen als Quick Connectoren bezeichnet. Das Vaterstück nennt sich dabei Adapter und das Mutterstück QC Body.

US 2001/0046111 offenenbart einen ähnlichen Schnellverbinder mit einer Kegeldruckfeder als leitendes Zwischenelement.

Bei Schnellverbindern der genannten Art ist im Allgemeinen zu gewährleisten, dass elektrostatische Aufladungen, die durch das Hindurchströmen von Kraftstoff durch den Verbinder und die angeschlossenen Leitungen bzw. Systemelemente bedingt sind, in die Kraftfahrzeugkarosserie abgeleitet werden können. Bei aus der Praxis bekannten Schnellverbindern der genannten Art, bei denen der Kunststoff der Kunststoffbeschichtung des Metallrohres nicht elektrisch leitfähig gemacht und zumindest eine der beiden O-Ringdichtungen aus einem elektrisch leitfähig gemachten Material hergestellt sein kann (vgl. z. B. EP 0 766 806 B1) erfolgt die hierfür erforderliche elektrische Verbindung im Schnellverbinder gleichsam nur durch Überschlag. Bei dickeren Kunststoffbeschichtungen ist das aus sicherheitstechnischen Gründen nicht mehr tolerierbar.

Der Erfindung liegt die Aufgabe zugrunde, einen Schnellverbinder der eingangs genannten Art so auszubilden, dass unter allen Umständen eine sichere elektrische Verbindung über den Schnellverbinder gewährleistet ist.

Hierzu besteht die Erfindung sowohl aus einem Schnellverbinder gemäss Anspruch 1 als auch aus einem Schnellverbinder gemäss Anspruch 2.

Der durch die Erfindung erreichte Vorteil besteht darin, dass die gewünschte elektrisch leitfähige Verbindung im verrasteten Zustand von Vater- und Mutterstück permanent und zuverlässig gewährleistet ist..

Im Folgenden wird die Erfindung anhand einer ein Ausführungsbeispiel darstellenden Zeichnung näher erläutert.
Es zeigen:
- Fig. 1: einen Querschnitt durch einen Schnellverbinder gemäss dem Stand der Technik.
- Fig. 2: einen Querschnitt entsprechend Fig. 1 durch eine Ausführungsform gemäss der Erfindung.
- Fig. 3: perspektivisch eine andere Ausführungsform einer Feder.

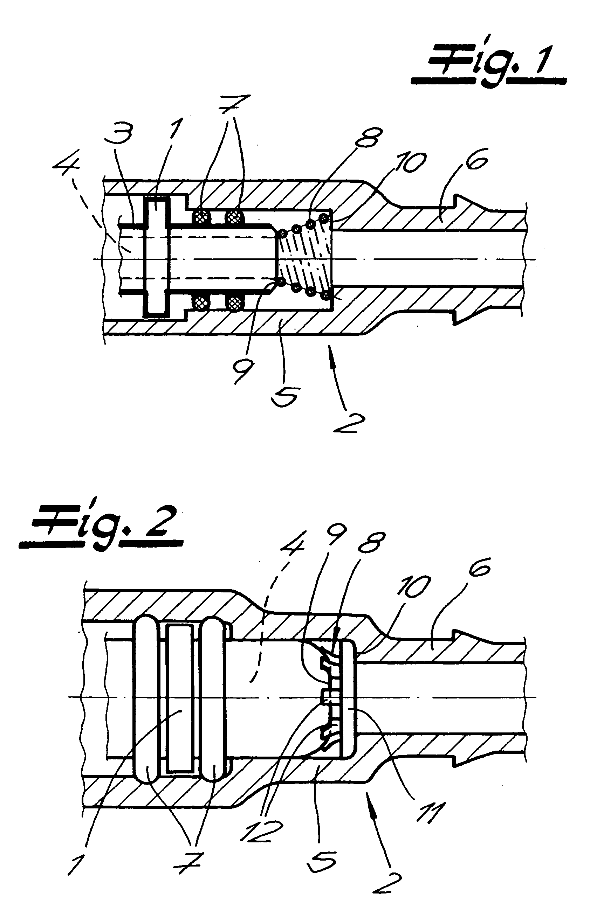

Der in den Figuren dargestellte Schnellverbinder ist für ein Kraftstoffleitungssystem eines Kraftfahrzeuges oder dergleichen bestimmt und besteht in seinem grundsätzlichen Aufbau aus einem Vaterstück 1 und einem Mutterstück 2. Das Vaterstück 1 besteht aus elektrisch nicht leitfähigem Kunststoff und ist auf einem Ende eines mit Kunststoff 3 beschichteten Metallrohres 4 angeordnet, welcher ebenfalls nicht elektrisch leitfähig gemacht ist. Das Mutterstück 2 besteht demgegenüber aus einem z. B. mit Kohlenstofffasern oder Ruß elektrisch leitfähig gemachten Kunststoff und weist einerseits eine hülsenförmige Aufnahme 5 und andererseits ein Anschlussteil 6 auf. In der hülsenförmigen Aufnahme 5 ist das Vaterstück 1 unter Zwischenschaltung zweier O-Ringdichtungen 7 verrastbar. Die Elemente zur Verrastung sind im Einzelnen in den Fig. 1 und 2 nicht dargestellt, da sie im Stand der Technik hinlänglich bekannt sind. Das Anschlussteil 6 ist in ein anzuschließendes Systemelement, z. B. ein weiteres kunststoffbeschichtetes Metallrohr einführbar.

Wie man aus den Fig. 1 und 2 leicht erkennt, ist im Bereich des inneren Endes der Aufnahme 5 des Mutterstückes 2 eine Feder 8 aus einem elektrisch leitfähigen Material angeordnet, die bei verrastetem Vaterstück 1 in gespanntem Zustand einerseits an der metallischen Stirnfläche 9 des Metallrohres 4 und andererseits an der Innenseite 10, d. h. am Boden der Aufnahme 5 anliegt.

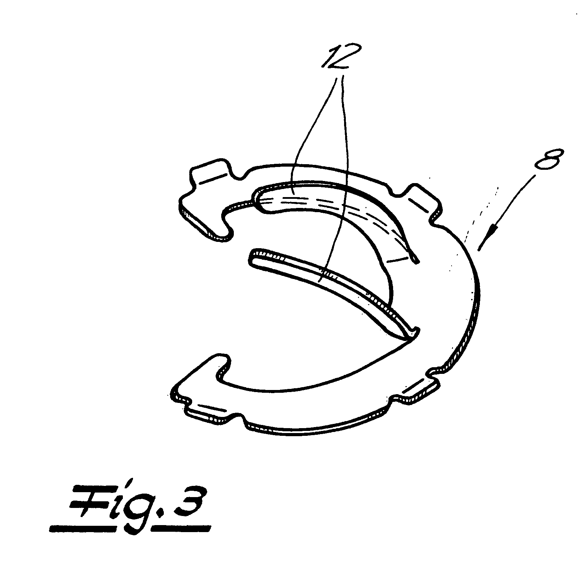

Nach Fig. 1 ist die Feder 8 aus Metall hergestellt und spiralfederartig, insbesondere als Kegeldruckfeder ausgeführt. Bei der Ausführungsform nach Fig. 2 ist die Feder 8 aus einem elektrisch leitfähig gemachten Kunststoff hergestellt und als Ring 11 mit Federnasen 12 ausgebildet. Die Feder 8 ist hier stoffschlüssig mit der Aufnahme 5 verbunden. Die Variante der Feder 8 nach Fig. 3 zeigt eine tellerfederartige Ausbildung mit ausgebogenen Anlage- bzw. Federnasen 12 zum Anlegen an das Metallrohr; die Feder 8 ist hier wiederum aus Metall hergestellt. Bei der Ausführungsform nach Fig. 3 ist die Feder 8 zweckmäßigerweise kraft- und/oder formschlüssig in die Aufnahme 5 eingebunden.

## Patentansprüche

1. Schnellverbinder für ein Kraftstoffleitungssystem eines Kraftfahrzeuges oder dergleichen, bestehend aus einem Vaterstück (1) aus einem Ende eines mit einem elektrisch nicht leitfähigen Kunststoff beschichteten Metallrohres und aus einem elektrisch leitfähigen Mutterstück (2), welches einerseits eine hülsenförmige Aufnahme (5), in der das Vaterstück (1) unter Zwischenschaltung wenigstens einer O-Ringdichtung (7) verrastbar ist, und andererseits ein Anschlussteil (6) aufweist, das elektrisch leitend mit einem anzuschließenden Systemelement verbindbar, insbesondere in ein Kunststoffrohr mit einer elektrisch leitfähigen Innenschicht einführbar ist, wobei im Bereich des inneren Endes der Aufnahme (5) des Mutterstückes (2) eine Feder (8) aus einem elektrisch leitfähigen Material angeordnet ist, die bei verrastetem Vaterstück (1) in gespanntem Zustand einerseits an der metallischen Stirnfläche (9) des Metallrohres (4) und andererseits an der Innenseite (10) der Aufnahme (5) anliegt und wobei die Feder (8) stoffschlüssig mit der Aufnahme (5) verbunden ist.

2. Schnellverbinder für ein Kraftstoffleitungssystem eines Kraftfahrzeuges oder dergleichen, bestehend aus einem Vaterstück (1) aus einem Ende eines mit einem elektrisch nicht leitfähigen Kunststoff beschichteten Metallrohres und aus einem elektrisch leitfähigen Mutterstück (2), welches einerseits eine hülsenförmige Aufnahme (5), in der das Vaterstück (1) unter Zwischenschaltung wenigstens einer O-Ringdichtung (7) verrastbar ist, und andererseits ein Anschlussteil (6) aufweist, das elektrisch leitend mit einem anzuschließenden Systemelement verbindbar, insbesondere in ein Kunststoffrohr mit einer elektrisch leitfähigen Innenschicht einführbar ist, wobei im Bereich des inneren Endes der Aufnahme (5) des Mutterstückes (2) eine Feder (8) aus einem elektrisch leitfähigen Material angeordnet ist, die bei verrastetem Vaterstück (1) in gespanntem Zustand einerseits an der metallischen Stirnfläche (9) des Metallrohres (4) und andererseits an der Innenseite (10) der Aufnahme (5) anliegt, wobei die Feder (8) tellerfederartig ausgebildet ist und wobei die tellerfederartig ausgebildete Feder (8) ausgebogene Anlagenasen (12) für die Stirnfläche des Metallrohrs aufweist.

3. Schnellverbinder nach Anspruch 1, wobei die Feder (8) spiralfederartig ausgebildet ist.

4. Schnellverbinder nach Anspruch 3, wobei die schraubenfederartig ausgebildete Feder (8) eine Kegeldruckfeder ist.

5. Schnellverbinder nach einem der Ansprüche 1 bis 4, wobei die Feder (8) aus Metall hergestellt ist.

6. Schnellverbinder nach einem der Ansprüche 1 bis 4, wobei die Feder (8) aus einem elektrisch leitfähig gemachten Kunststoff hergestellt ist.

## Claims

1. A quick connector for a fuel-line system of a motor vehicle or similar vehicle, comprising a male connector (1) on one end of a metal tube coated with an electrically non-conductive plastic and an electrically conductive female connector (2) which, on the one hand, features a sleeve-shaped receptacle (5) in which the male connector (1) can interlock whilst connecting at least an o-ring seal (7) and, on the other hand, features a connector (6) that is electrically conductive and connectable with a system element to be connected, which, in particular, can be inserted into a plastic tube with an electrically conductive internal coating, in which a spring (8) made of electrically conductive material is arranged in the inner end area of the receptacle (5) of the female connector (2), in which the male connector (1), on the one hand, is interlocked in a tensioned stated on the metallic face surface (9) of the metal tube (4) and, on the other hand, lies on the inner side (10) of the receptacle (5), and in which the spring (8) is connected in a form-closed manner with the receptacle (5).

2. The quick connector for a fuel-line system of a motor vehicle or a similar vehicle, comprising a male connector (1) on one end of a metal tube coated with an electrically non-conductive plastic and an electrically conductive female connector (2) which, on the one hand, features a sleeve-shaped receptacle (5) in which the male connector (1) can interlock whilst connecting at least an o-ring seal (7), and, on the other hand, features a connector (6) that is electrically conductive and connectable with a system element to be connected, which, in particular, can be inserted into a plastic tube with an electrically conductive internal coating, in which a spring (8) made of electrically conductive material is arranged in the inner end area of the receptacle (5) of the female connector (2), in which the male connector (1) is engaged in a tensioned state on the metallic face surface (9) of the metal tube (4) on the one hand, and, on the other hand, lies on the inner side (10) of the receptacle (5), and in which the spring (8) is formed as disc spring and in which the disc-spring-type spring (8) features bent support tongues (12) for the face surface of the metal tube.

3. The quick connector according to claim 1, wherein the spring (8) is shaped as a spiral spring.

4. The quick connector according to claim 3, wherein the screw spring shaped spring (8) is a conical compression spring.

5. The quick connector according to one of the claims 1 to 4, wherein the spring (8) is manufactured in metal.

6. The quick connector according to one of the claims 1 to 4, wherein the spring (8) is manufactured in an electrically conductive plastic.

## Revendications

1. Raccord rapide pour un circuit de conduites de carburant sur un véhicule motorisé ou assimilé, comprenant une pièce mâle (1) sortant d'une extrémité d'un tube métallique revêtu d'une manière plastique non électroconductrice et une pièce femelle (2) électroconductrice présentant d'une part un réceptacle (5) en forme de douille dans lequel la pièce mâle (1) peut encranter par l'intermédiaire d'au moins un joint torique (7) d'étanchéité, et d'autre part une pièce de raccordement (6) reliable de façon électroconductrice avec un élément à raccorder du circuit, pièce en particulier introductible dans un tube en matière plastique comportant une couche intérieure électroconductrice, sachant que dans la zone de l'extrémité intérieure du réceptacle (5) de la pièce femelle (2) est agencé un ressort (8) en matériau électroconducteur, ressort qui, tendu lorsque la pièce mâle (1) a encranté, applique d'une part contre la surface métallique frontale (9) du tube métallique (4) et d'autre part contre le côté intérieur (10) du réceptacle (5), sachant que le ressort (8) se trouve relié au réceptacle (5) par adhérence de matières.

2. Raccord rapide pour un circuit de conduites de carburant sur un véhicule motorisé ou assimilé, comprenant une pièce mâle (1) sortant d'une extrémité d'un tube métallique revêtu d'une matière plastique non électroconductrice et une pièce femelle (2) électroconductrice présentant d'une part un réceptacle en forme de douille (5) dans lequel la pièce mâle (1) peut encranter par l'intermédiaire d'au moins un joint torique (7) d'étanchéité et d'autre part une pièce de raccordement (6) reliable de façon électroconductrice avec un élément à raccorder du circuit, pièce en particulier introductible dans un tube en matière plastique comportant une couche intérieure électroconductrice, sachant que dans la zone de l'extrémité intérieure du réceptacle (5) de la pièce femelle (2) est agencé un ressort (8) en matériau électroconducteur, ressort qui, tendu lorsque la pièce mâle (1) a encranté, applique d'une part contre la surface métallique frontale (9) du tube métallique (4) et d'autre part contre le côté intérieur (10) du réceptacle (5), sachant que le ressort (8) est configuré en ressort assiette et sachant que le ressort (8) configuré en ressort assiette présente des saillies (12) incurvées affectées à la surface frontale du tube métallique.

3. Raccord rapide selon la revendication 1, sachant que le ressort (8) est configuré en spirale.

4. Raccord rapide selon la revendication 3, sachant que le ressort (8) à boudin est un ressort de compression conique.

5. Raccord rapide selon l'une des revendications 1 à 4, sachant que le ressort (8) a été fabriqué en métal.

6. Raccord rapide selon l'une des revendications 1 à 4, sachant que le ressort (8) a été fabriqué dans une matière plastique rendue électroconductrice.
